# EUROPÄISCHE PATENTANMELDUNG

(11) **EP 0 700 779 A2**
(43) Veröffentlichungstag der Anmeldung: **13.03.1996**
(21) Anmeldenummer: 95111474.3
(22) Anmeldetag: 21.07.1995
(51) Int. Cl.: B32B 31/00, B32B 27/40, E04D 5/00

(54) **Diffusionsoffene Baufolien und Verfahren zu ihrer Herstellung**

(30) Priorität: 10.08.1994 DE 4428304; 07.02.1995 DE 19504017
(71) Anmelder: von Borries, Horst, D-47839 Krefeld (DE)
(72) Erfinder: Dekoninck, Luc, B-1180 Ukkel (BE); Haudenhuyse, Guido, B-9000 Gent (BE)

(57) **Zusammenfassung**

Nach einem Verfahren zum Herstellen von diffusionsoffenen Baufolien 3 für Isolierzwecke, die aus Polyurethan-Folien 16 bzw. Polyurethanschichten 26, und Materialbahnen 14, 15, 20 auf Faserbasis bestehen und insbesondere als Dachunterspannbahnen zum Abdecken von Dächern mit zwischen den Sparren angeordnetem Wärmdämmaterial dienen, werden Baufolien 3 hergestellt, die sich dadurch auszeichnen, daß zumindest zwei Materialbahnen 14, 15, 20 mit einer wasserdampfdurchlässigen Polyurethanschicht 26 bzw. -Folie 16 verbunden sind.

Das Polyurethan für die Herstellung der Polyurethan-Folie 16 bzw. - Schicht 26, die als Zwischenschicht zwischen den Materialbahnen 14, 14, 20 liegt, wird aus drei Komponenten polymerisiert. Die erste Komponente besteht aus einem Polyolgemisch, das Polyäthylenglycol ( PEG ) oder ein PEG-Copolymer sowie Polypropylenglycol ( PPG ) und/oder Polytetramethylenglycol ( PTG ) und/oder Polycaprolactan (PCL) und/oder Polycarbonat (PC) und/oder Polyadipate enthält. Die zweite Komponente ist Methylendiphenyldiisocyanat (MDI). Die dritte Komponente enthält mindestens einen Kettenverlängerer und oder Gemische von mehreren.

## Beschreibung

Die Erfindung betrifft diffusionsoffene Baufolien und verfahren zum Herstellen von diffusionsoffenen Baufolien für Isolierzwecke, die aus Polyurethan und Materialbahnen auf Faserbasis bestehen, insbesondere Dachunterspannbahnen zum Abdecken von Dächern mit zwischen den Sparren angeordnetem Wärmedämmaterial.

Baufolien für Isolierzwecke dienen dazu das Eindringen von Wasser in Gebäude zu verhindern, gleichzeitig sollen sie aber im Bau vorhandene Feuchtigkeit, beispielsweise die Neubau-Fechtigkeit, oder im Haus z. B. durch Kochen oder Waschen entstehende Feuchtigkeit, als Wasserdampf passieren lassen. Ein typischer Vertreter dieser Foliengattung ist die Dachunterspannfolie. Die Erfindung wird daher nachstehend an diesem Beispiel beschrieben, ohne sie jedoch darauf zu beschränken.

Unterspannbahnen dienen dazu die darunter liegende Dachkonstruktion und die im Dachausbau angeordneten Räume vor eingetriebenem Flugschnee, Regen, Staub und Ruß zu schützen. Wesentliche Voraussetzung für die Funktion einer Unterspannbahn ist jedoch die Belüftung des Daches, insbesondere dann, wenn die Dachräume zu Wohnzwecken ausgebaut wurden und hierdurch mehr Nutzungsfeuchte und auch Neubaufeuchte entsteht. Bei ausgebauten Dachräumen ist praktisch der gesamte Sparrenquerschnitt mit Wärmedämmung ausgefüllt, so daß für die Belüftung zwischen der Wärmedämmung und der Unterspannbahn praktisch kein Freiraum mehr bleibt.

Es ist zwar üblich zwischen der Wärmedämmung und dem Innenraum eine Dampfsperre anzuordnen die häufig gleich mit der Wärmedämmung, beispielsweise einer Glas-oder Mineralwollmatte in Form von Alufolien-Papier-Verbund verbunden ist, meist führt jedoch unzulängliche Verarbeitung beim Anbringen dieser kombinierten Dampfsperr / Wärmedämmungen dazu, daß die Funktion gar nicht oder nur unzureichend erfüllt wird. In vielen Fällen wird die Alu-Papierschicht durchstoßen oder nicht ordnungsgemäß überlappend verlegt, so daß die Feuchtigkeit nach außen in die Wärmedämmung eindringt, diese unwirksam macht und zugleich wegen fehlender Belüftung zwischen Wärmedämm- und Unterspannbahn zur Durchfeuchtung der tragenden Holzdachkonstruktion führt.

Um diese bekannten Nachteile zu vermeiden ist bereits vorgeschlagen worden eine PE-Folie zu perforieren und diese als Unterspannbahn einzusetzen, wodurch sich die bildende Feuchtigkeit nach außen, also zur Ziegelseite hin, entfernen kann. Die Perforation hat jedoch den Nachteil daß von außen auch durch die gebildeten Kapillaren Wasser eintritt, der gewünschte Effekt ist daher nicht zu erreichen.

Bekannt ist ferner, eine Unterspannbahn einzusetzen, die aus einem atmungsaktiv beschichtetem Kunstharzspinnvlies besteht. Die Beschichtung des Kunstharzvlieses erfolgt mittels einer Paste, die in einer größeren Dicke aufgebracht wird, zudem muß aus Festigkeitsgründen ein relativ dickes Polyesterspinnvlies eingesetzt werden, so daß sich eine recht kostspielige Unterspannbahn ergibt, die allerdings die geforderte Wasserdampfdurchlässigkeit aufweist und die darunter liegenden Räume vor Regen, Staub und Ruß schützt.

Aus der DE-A 3425794 ist eine Unterspannbahn bekannt, die aus einer Polyurethanfolie mit einseitig, in der Einbaulage gebäudeseitig, also innenliegenden, Vliesschicht besteht. Die PU Folie kann dabei durch ein eingeformtes Netz verstärkt sein, oder das Verstärkungnetz kann zwischen PU Folie und Vliesschicht angeordnet sein, wobei das Vlies ein Polyäthylenvlies ist.

Mit dieser Unterspannbahn soll auch bei Stoßbelastungen die Bildung von Tropfwasser weitestgehend verhindert werden.

Die Praxis zeigte in der Zwischenzeit, daß diese Unterspannbahn nicht immer allen Anforderungen gerecht werden kann, das heißt, daß die Wasserdampfdurchlässigkeit, die wie Messungen ergaben, bei ca 300 g/m².24 h liegt, in Verbindung mit dem Speichervermögen des Vlieses zumindest in ungünstigen Fällen nicht ausreichend ist. Hinzu kommt, daß wasserdampfdurchlässiges Polyurethan in der feuchten Umgebung aufquillt, wodurch die Haftung des Vlieses stark verschlechtert wird, also die Gefahr besteht, daß sich das Vlies vom Polyurethan ablöst.

Ein weiteres Problem ist die Dampfdurchlässigkeit, sie soll zum einen hoch sein, zum anderen aber nicht so hoch, daß Wasser die Folie durchdringen kann, außerdem darf sich kein Kondensat auf der Folie bilden bzw. niederschlagen, da eine Kondensatschicht den Dampfdurchtritt stark behindert.

Die EP-A 295694 beschreibt ein wasserdampfdurchlässiges Material, das durch Co-Extrusion auf einen textilen Träger erzeugt wird. Ein thermoplastisches Harz aus der Reihe Polyurethan, Polyamid oder Polyester wird zusammen mit einem pellfähigen Harz auf den textilen Träger extrudiert. Das Harz soll dabei eine steile Schmelzviskositätskurve aufweisen. Die Dicke kann durch die Co-Extrusion auf einige um reduziert werden. Eine steile Schmelzviskositätskurve verschlechtert aber die Extrusionseigenschaften erheblich. Außerdem ist das Verfahren durch Einsatz eines peelfähigen Harzes sehr kostenintensiv, da der entstehende peelfähige Harzfilm, der vom wasserdampfdurchlässigen Material abgezogen wird, nicht mehr weiter verwendet werden kann.

Einen allgemeinen Überblick über wasserdampfdurchlässige, kompakte Textilbeschichtungen mit Polyurethanen findet man in der gleichnamigen Literaturstelle aus Coating 9/92. Insbesondere wird hier auf die Beschichtung mit hydrophilierten Polyurethanen eingegangen unter gleichzeitigem Hinweis auf das Quellen dieser Materialien, das die Haltbarkeit und das Haftvermögen am Träger störend beeinflußt.

Aufgabe der vorliegenden Erfindung ist daher, eine Baufolie zu schaffen, die auch bei defekter oder fehlender Dampfsperre direkt auf der Wärmedämmung verlegt werden kann, die Dampf nach außen passieren läßt ohne Bildung von Kondensat auf der Folie und ohne Ablösungserscheinungen der Materialbahn von der Folie, die ferner staub- und wasserdicht ist, die erforderliche Festigkeit und Weiterreißfestigkeit aufweist und zudem preisgünstig herzustellen ist.

Diese Aufgabe wird bei einem Verfahren zum Herstellen von diffusionsoffenen Baufolien für Isolierzwecke, die aus Polyurethan und Materialbahnen auf Faserbasis bestehen, insbesondere Dachunterspannbahnen zum Abdecken von Dächern mit zwischen den Sparren angeordnetem Wärmedämmaterial, dadurch gelöst, daß zumindest zwei Materialbahnen mit einer wasserdampfdurchlässigen Polyurethanschicht verbunden werden.

Zweckmäßig werden die Materialbahnen mit der wasserdampfdurchlässigen Polyurethanschicht so verklebt, daß die Polyurethanschicht beidseitig von den Materialbahnen abgedeckt ist.

Vorteilhaft kann dabei als wasserdampfdurchlässige Polyurethanschicht eine Polyurethanfolie mit einer Dicke von 8µm bis 50µm eingesetzt werden.

Da die Festigkeit der Baufolie im wesentlichen durch die außenliegenden Materialbahnen bestimmt wird, kann bereits eine extrem dünne Folie bzw. Schicht eingesetzt werden, die eine hohe Wasserdampfdurchlässigkeit aufweist und trotzdem wasserdicht ist.

Eine besonders bevorzugte Ausgestaltung der Erfindung sieht vor, daß die Verklebung punktförmig erfolgt.

Sehr vorteilhaft ist, wenn die Verklebung linienförmig erfolgt.

In beiden Fällen ergibt sich ein Material, das trotz des Aufbringens eines Klebers eine hohe Wasserdampfdurchlässigkeit aufweist, da der Kleber nur geringe Bereiche der Folie bedeckt und die Materialbahnen ohnehin hoch wasserdampfdurchlässig sind.

Zweckmäßig deckt der Kleber 3 bis 20 % der zu verklebenden Fläche ab. In den vom Kleber bedeckten Bereichen wird im allgemeinen die Dampfdurchlässigkeit reduziert. Die Größe der Klebepunkte bzw. die Breite der Klebelinien sollte deshalb so gering wie möglich sein, um eine gleichmäßige Verteilung der Dampfdurchlässigkeit über die gesamte Fläche zu erreichen. Es ist günstiger die Zahl der Klebepunkte oder -Linien zu erhöhen, wobei natürlich auch die Klebelinien aus aneinandergereihten Punkten bestehen können, als die Flächen zu vergrößern.

Als Kleber wird bevorzugt ein Ein- oder Zweikomponenten Kleber auf Polyurethan Basis aufgebracht. Kleber dieser Art ergeben mit fast allen Materialien aus denen die Materialbahnen bestehen eine sehr gute und vor allem wasserfeste Verbindung, die auch beim Quellen, das für alle atmungsaktiven Stoffe, wie Copolyamid- und auch Polyurethansorten, typisch ist, noch für eine ausreichende Haftung zwischen Folie und Materialbahn sorgt.

Eine bevorzugte Ausgestaltung der Erfindung sieht vor, daß als Kleber ein reaktivierbarer Kleber aufgebracht wird.

Die Verwendung eines reaktivierbaren Klebers, d.h. eines Schmelzklebers - hotmelt -, ermöglicht, die Materialbahnen schon außerhalb der Laminier-anlage vollständig zu fertigen und damit die Laminiergeschwindigkeit zu steigern. Da z.B. Vliese in anderen Werken gefertigt werden wie Folien, ist es möglich bei der Vliesherstellung schon den Kleber aufzubringen und die Fertigung so zu rationalisieren.

Zweckmäßig weisen die Materialbahnen einen unterschiedlichen Aufbau und/oder unterschiedliche Faserzusammensetzungen auf.

Durch die Verwendung von Materialbahnen unterschiedlichen Aufbaues ist es möglich die innere und die äußere Materialbahn exakt den Anforderungen anzupassen, die an sie gestellt werden, d.h., für die innere Materialbahn, eine hydrophile Materialbahn auszuwählen die ein hohes Speichervermögen besitzt und für die äußere Materialbahn - jeweils bezogen auf den Einbauzustand im Dach - eine hyrophobe.

Natürlich besteht auch die Möglichkeit Materialbahnen zu verwenden, die unterschiedliche Faserzusammensetzungen aufweisen d.h., daß die Materialbahnen aus einem Fasergemisch bestehen. Dadurch können besonders preisgünstige Materialbahnen eingesetzt werden, ebenso ist es möglich, nur hydrophobe Materialbahnen bzw. Fasern für beide Außenlagen zu verwenden. So ergibt beispielsweise die Verwendung eines Polypropylenvlieses für beide Außenlagen eine sehr preisgünstige Baufolie in Sandwichform.

Eine bevorzugte Ausgestaltung der Erfindung sieht vor, daß die Materialbahnen aus Synthesefasern und/oder Fäden bestehen und eine Dicke von 80 µm bis 500 µm aufweisen.

Diese Ausführungsform gewährleistet ein hohes Speichervermögen und gleichzeitig eine große Sicherheit gegen Schädlingsbefall und Verrotten der Materialbahnen.

Zweckmäßig ist mindestens eine Materialbahn ein Fadengelege. Durch die Verwendung eines Fadengeleges als Materialbahn ist es mit einfachen Mitteln möglich die Längs- und Querfestigkeit der Materialbahn den gewünschten Bedingungen anzupassen, außerdem ist es möglich durch Verwendung unterschiedlicher Fäden für das Gelege und für die Nähte eine Fadenmischung zu erzeugen, die einerseits ein hohes Waserspeichervermögen und andererseits eine gute Verbindung zum Polyurethan ergibt.

Eine vorteilhafte Ausgestaltung der Erfindung sieht vor, daß mindestens eine der Materialbahnen ein Vlies ist. Das Vlies als solches kann zweckmäßig ein Nadelvlies sein, d.h., daß die Verfestigung durch Nadeln, Luft- oder Wasserstrahlen erfolgt ist. Im einzelnen ist es davon abhängig, ob es sich um ein trockenformiertes oder um ein naßformiertes Vlies handelt. Nach allen drei Verfahren werden jedoch Vliese erhalten, die eine hohe Porosität aufweisen, damit also auf der einen Seite dampfdurchlässig sind, auf der anderen Seite aber auch in der Lage sind, wenn hydrophile Fasern verwendet werden, größere Feuchtigkeitsmengen zu speichern.

Außer genadelten Vliesen können auch Vliese eingesetzt werden die punktweise gebunden sind, sogenannte spot bonded Nonwoven. Ebenso ist die Verwendung von Spinnvliesen möglich -Spunbond-. Verglichen mit dem erst genannten Nadelvliesen, ergeben sich bei dem spot bonded Nonwoven aber weniger gasdurchlässige Flächen. Spunbond ist außerdem ausschließlich auf Synthesefasern beschränkt.

Bevorzugt bestehen die Materialbahnen aus Synthesefasern und/oder Fäden und weisen eine Dicke zwischen 80 und 500 µm auf. Durch die Wahl unterschiedlicher Dicken wird die Festigkeit in weiten Grenzen steuerbar.

Materialbahnen aus Synthesefasern und/oder Fäden weisen als solche eine hohe Festigkeit auf, aufgrund der Wirrlage im Vlies können dabei für Längs-und Querkräfte gleiche Werte oder annähernd gleiche Werte erreicht werden, es ist aber auch möglich ganz gezielt die Längs- oder die Querfestigkeit zu erhöhen. Ein weiterer Vorteil ist, daß die Thermoplaste der Synthesefasern oder - fäden sich beim Verkleben des Polyurethans mit den Vliesbahnen, mit diesem hervorragend verbinden.

Zweckmäßig wird der Kleber auf die hydrophile Materialbahn aufgebracht, weil diese Bahn stärker von Lösetendenzen betroffen ist und deshalb so gut wie möglich gegen ein Ablösen gesichert sein muß.

Sehr günstig ist, wenn der auf die Materialbahnen aufgebrachte Kleber beim Zusammenführen und Verpressen der Materialbahnen mit der Polyurethanfolie aktiviert wird. Die Aktivierung erfolgt dabei durch Wärme, die in einem Walzenstuhl zusammengefürten Bahnen, Außenlage, Polyurethan und Innenlage werden zwischen den Walzen erwärmt und verpreßt.

Als Polyurethanfolie wird dabei vorzugsweise eine hoch wasserdampfdurchlässige Folie eingesetzt, wodurch sich auf der einen Seite eine gute Durchlässigkeit für Wasserdampf, auf der anderen Seite eine absolute Dichtigkeit gegen Wasser ergibt.

Die Wasserdampfdurchlässigkeit der Polyurethanfolie beträgt vorteilhaft mehr als 500 g/m² und 24 h.

Der Liniendruck zwischen den Walzen, die die Materialbahnen mit der Polyurethanfolie zusammenführen und zur Verbindung zusammenpressen, liegt, gemäß einer bevorzugten Ausgestaltung der Erfindung, zwischen 70 und 1400 Kp/m.

Durch die Presstemperatur in Verbindung mit dem Anpreßdruck der Walzen wird der auf einer Seite der Materialbahnen und zwar der der Polyurethanfoile zugewandten Seite, aufgebrachte Kleber aktiviert, so daß sich die Polyurethanfolie fest und auch bei Wassereinwirkung dauerhaft, mit den beiden Materialbahnen verbinden kann. Hierdurch ist der wesentliche Punkt, die Haftfestigkeit zwischen den Materialbahnen, gelöst, zum anderen aber auch die Dampfdurchlässigkeit nicht wesentlich reduziert.

Grundlegende Bedeutung kommt dem Merkmal zu, daß das Polyurethan für die Herstellung der Polyurethanfolie, die als Zwischenschicht zwischen den Materialbahnen liegt, aus drei Komponenten polymerisiert wird; wobei die erste Komponente aus einem Polyolgemisch besteht, das Polyäthylenglycol ( PEG ) oder ein PEG-Copolymer sowie Polypropylenglycol ( PPG ) und/oder Polytetramethylenglycol ( PTG ) und/oder Polycaprolactan (PCL) und/oder Polycarbonat (PC) und/oder Polyadipate enthält; die zweite Komponente aus Methylendiphenyl-diiso cyanat (MDI) besteht; und die dritte Komponente mindestens einen Kettenverlängerer und oder Gemische von mehreren enthält.

Wesentlich ist, daß die Komponenten in folgendem Gewichtsverhältnis in der Copolymerisatzusammensetzung vorhanden sind:
Polyolgemisch ( Komponente 1 ): 30 bis 60 Gewichtsprozent;
MDI ( Komponente 2 ): 30 bis 50 Gewichtsprozent;
Diolgemisch ( Komponente 3 ): 10 bis 20 Gewichtsprozent;
und sich auf 100 Gewichtsprozent ergänzen.

Vorteilhaft werden Kurzkettenglykole und/oder deren Gemische verwandt, insbesondere Kurzkettenglykole und/oder deren Gemische, die aus der Reihe BD, HD, EG, DEG oder NPG ausgewählt sind.

Eine besonders bevorzugte Ausgestaltung der Erfindung sieht vor, daß durch zwei Materialbahnen ein Walzenspalt gebildet, in diesen Polyurethan extrudiert, mit den Materialbahnen verpresst und abgekühlt wird. Durch dieses extrem einfache Verfahren lassen sich sehr hohe Arbeitsgeschwindigkeiten bei minimalem Aufwand erreichen, des weiteren kann die extrudierte Polyurethanmenge sehr gering gehalten werden und dennoch eine gesschlossene Schicht bilden, die mechanisch fest mit den Außenlagen verbunden ist und wie eine armierte Folie wirkt.

Vorteilhaft kann dabei zumindest auf eine Materialbahn Polyurethan extrudiert und diese mit einer weiteren Materialbahn zusammengeführt werden, woran sich ein Verpressen und Abkühlen anschließt.

Theoretisch ist es auch möglich, beide Materialbahnen gleichzeitig mit Polyurethan zu beschichten und diese erst im Anschluß daran zusammen zu führen und zu verpressen, in der Praxis ergäbe sich dabei jedoch eine sehr aufwendige, monströse Maschine. Man kann jedoch mehr als zwei Materialbahnen, also beispielsweise drei oder vier, miteinander verbinden, aus wirtschaftlichen Gründen sollte das aber zeitlich nacheinander erfolgen, also in mehreren Durchgängen. Die Anforderungen bezüglich der Festigkeit und des Speichervermögens werden aber bereits mit zwei Materialbahnen in den meisten Fällen erfüllt, so daß sich der Einsatz von drei oder mehr Materialbahnen nur auf spezielle Fälle beschränkt.

Vorteilhaft wird ein Polyurethan mit einer Wasserdampfdurchlässigkeit von mindestens 500 g/m² 24 h und einer Härte von 80 bis 95 Shore A verwandt, das ein flaches Schmelztemperaturprofil besitzt.

Durch den Einsatz eines Polyurethans mit hoher Dampfdurchlässigkeit ist ein schneller Austausch der Feuchtigkeit zwischen Innen- und Außenraum möglich. Das Speichervermögen der faserhaltigen Materialbahnen kann dann geringer sein, oder die Bahnen können, bezogen auf den absoluten Durchsatz, mehr Wasser aufnehmen, da es die PU-Bahn schneller durchdringt.

Die Härte im Bereich von 80 bis 95 Shore A ist direkt mit den weiteren Eigenschaften der Folie verbunden, also mit der Reißfestigkeit, Dehnung usw. Eine Folie im genannten Härtebereich erfüllt daher die an sie gestellten mechanischen Anforderungen voll.

Das flache Schmelztemperaturprofil ermöglicht eine ideale Kaschierbeschichtung, da die Viskosität durch langsame Temperatursteigerung den Erfordernissen angeglichen werden kann und sich nicht zu plötzlich ändert, was zu Haftungsproblemen und Gasdurchlässigkeitsänderungen führen würde.

Zweckmäßig liegt die Extrusionstemperatur zwischen 120 und 250 Grad C, der Schmelzindex ( MFI-Wert ) zwischen 10g/10min bei 160°C und 5g/10min bei 200° C.

Der Liniendruck zwischen den Walzen, die die Materialbahnen zusammenführen und nach der Beschichtung zusammenpressen, liegt, gemäß einer bevorzugten Ausgestaltung der Erfindung, zwischen 70 und 1400 Kp/m.

Durch die Extrusionstemperatur wird auf der einen Seite festgelegt, wie lange das Polyurethan zwischen den beiden Materialbahnen flüssig ist, d.h. wie gut es sich mit den beiden Materialbahnen verbinden kann. Hier wird also als wesentlicher Punkt die Haftfestigkeit zwischen den Materialbahnen angesprochen, zum anderen aber auch die Eindringtiefe in die Materialbahnen.

Die Viskosität des Polyurethans, die durch die MFI-Werte festgelegt ist, bestimmt im gewissen Maße, auch im Zusammenwirken mit dem Liniendruck zwischen den Anpresswalzen, die Eindringtiefe des Polyurethans in die beiden Materialbahnen.

Eine bevorzugte Ausgestaltung der Erfindung sieht daher vor, daß die Eindringtiefe des Polyurethan 5% bis 50%, insbesondere 10% bis 25%, einer Materialbahndicke beträgt.

Es handelt sich bei dieser Materialbahndicke natürlich um die Materialbahn, die der Hausinnenseite zugewandt ist und damit die Aufgabe der Speicherschicht übernimmt. Die untere Grenze der Eindringtiefe ist dabei durch den erforderlichen Verbund, also die Verbundfestigkeit zum Polyurethan und zur außenliegenden Materialbahn gegeben, die obere Prozentgrenze gibt den Bereich an, bis zu dem das Polyurethan in die Materialbahn eindringen kann, ohne daß deren Speichervermögen zu stark beeinträchtigt wird.

Durch die Eindringtiefe wird auf der einen Seite die Festigkeit des Verbundes von innenliegender Materialbahn, PU und außenliegender Materialbahn festgelegt, zum anderen aber auch das Speichervermögen der inneren Materialbahn beeinflußt, die im eingebauten Zustand auf der Innenseite, also gegebenenfalls direkt auf der Wärmedämmschicht angeordnet sein wird.

Vorzugsweise werden die oder zumindest einige Fasern einer Materialbahn durch das Polyurethan angeschmolzen.

Diese Ausführungsform ermöglicht, eine sehr geringe Eindringtiefe für das Polyurethan vorzusehen, d.h., daß der größere Bereich der Materialbahn, bezogen auf die Materialbahndicke, zur Aufnahme von Wasser freibleibt. Die Materialbahn erhält dadurch ein höheres Speichervermögen. Erreicht wird das gewünschte Anschmelzen durch die Wahl entsprechender synthetischer Fasern oder Fäden deren Schmelzpunkt auf die Temperatur der PU-Schmelze abgestimmt ist.

Zweckmäßig weisen die Materialbahnen einen unterschiedlichen Aufbau und/oder unterschiedliche Faserzusammensetzungen auf. Durch die Verwendung von Materialbahnen unterschiedlichen Aufbaues ist es möglich die innere und die äußere Materialbahn exakt den Anforderungen anzupassen, die an sie gestellt werden, d.h., beispielsweise für die innere Materialbahn, eine Materialbahn auszuwählen die ein hohes Speichervermögen besitzt. Auf
der anderen Seite besteht die Möglichkeit auch Materialbahnen zu verwenden, die unterschiedliche Faserzusammensetzungen aufweisen d.h., daß die Materialbahnen
als solche aus einem Fasergemisch bestehen. Dadurch können besonders preisgünstige Materialbahnen eingesetzt werden.

Eine bevorzugte Ausgestaltung der Erfindung sieht vor, daß das Polyurethan, das als Zwischenschicht zwischen den Materialbahnen liegt, ein Copolymerisat aus drei Komponenten ist;
wobei die erste Komponente aus einem Polyolgemisch besteht, das Polyäthylenglycol ( PEG ) oder ein PEG-Copolymer sowie Polypropylenglycol ( PPG ) und/oder Polytetramethylenglycol ( PTG ) und/oder Polycaprolactan (PCL) und/oder Polycarbonat (PC) und/oder Polyadipate enthält;
die zweite Komponente Methylendiphenyldiisocyanat (MDI) ist;
und die dritte Komponente mindestens einen Kettenverlängerer und oder Gemische von mehreren enthält.

Wesentlich ist, daß die Komponenten in folgendem Gewichtsverhältnis in der Copolymerisatzusammensetzung vorhanden sind:
Polyolgemisch ( Komponente 1 ): 30 bis 60 Gewichtsprozent;
MDI ( Komponente 2 ): 30 bis 50 Gewichtsprozent;
Diolgemisch ( Komponente 3 ): 10 bis 20 Gewichtsprozent;
und sich auf 100 Gewichtsprozent ergänzen.

Durch diese Zusammensetzung wird die hohe Festigkeit der Dachbahn, - durch die gute Haftung am Vlies und die Eigenfestigkeit - sowie die große Wasserdampfdurchlässigkeit erreicht.

Besonders bevorzugt wird eine Ausführungsform der Erfindung die dadurch gekennzeichnet ist, daß die erste Komponente aus einem Polyolgemisch besteht, das 16 bis 100 Gewichtsprozent Polyäthylenglycol ( PEG ) und/oder PEG-Copolymer sowie, ergänzend auf 100 Gewichtsprozent, Polypropylenglycol ( PPG ) und/oder Polytetramethylenglycol ( PTG ) und/oder Polycaprolacton (PCL) und/oder Polycarbonat (PC) und/oder Polyadipate enthält.

Ebenso wesentlich ist der Einsatz von Kurzkettenglykolen und/oder deren Gemischen, wobei vorzugsweise zwei Diole verwandt werden, die insbesondere aus der Reihe BD, HD, EG, DEG oder NPG ausgewählt sind.

Das in der ersten Komponente enthaltene PEG kann als Reinpolymeres oder als Copolymerisat vorliegen. Sein Anteil bestimmt als hydrophyle Komponente im wesentlichen die Wasserdampfdurchlässigkeit. Die weiteren Komponenten des Polyolgemisches können in weitem Rahmen beliebig gewählt werden, ohne daß die Wasserdampfdurchlässigkeit dadurch verschlechtert wird. Zweckmäßig liegt ihr Gesamtanteil bei 10 Gewichtsprozent.

Die zweite Komponente, das MDI ergibt zusammen mit der dritten Komponente die mechanische Festigkeit, wobei bei der dritten Komponente wieder eine Vielzahl von Materialien an Kettenverlängerern zu Verfügung steht. Diese dritte Komponente ist aber nicht nur in Verbindung mit dem MDI für die Festigkeit maßgebend. Das Diolgemisch verbessert zusätzlich in erheblichem Maße die Extrusionsfähigkeit.

Zweckmäßig ist mindestens eine Materialbahn ein Fadengelege. Durch die Verwendung eines Fadengeleges als Materialbahn ist es mit einfachen Mitteln möglich die Längs- und Querfestigkeit der Materialbahn den gewünschten Bedingungen anzupassen, außerdem ist es möglich durch Verwendung unterschiedlicher Fäden für das Gelege und für die Nähte eine Fadenmischung zu erzeugen, die einerseits ein hohes Waserspeichervermögen und andererseits eine gute Verbindung zum Polyurethan ergibt.

Eine vorteilhafte Ausgestaltung der Erfindung sieht vor, daß mindestens eine der Materialbahnen ein Vlies ist. Das Vlies als solches kann zweckmäßig ein Nadelvlies sein, d.h., daß die Verfestigung durch Nadeln, Luft- oder Wasserstrahlen erfolgt ist. Im einzelnen ist es davon abhängig, ob es sich um ein trockenformiertes oder um ein naßformiertes Vlies handelt. Nach allen drei Verfahren werden jedoch Vliese erhalten, die eine hohe Porosität aufweisen, damit also auf der einen Seite dampfdurchlässig sind, auf der anderen Seite aber auch in der Lage sind größere Feuchtigkeitsmengen zu speichern.

Außer genadelten Vliesen können auch Vliese eingesetzt werden die punktweise gebunden sind, sogenannte spot bonded Nonwoven. Ebenso ist die Verwendung von Spinnvliesen möglich -Spunbond-. Verglichen mit dem erst genannten Nadelvliesen, ergeben sich bei dem spot bonded Nonwoven aber weniger gasdurchlässige Flächen. Spunbond ist außerdem ausschließlich auf Synthesefasern beschränkt.

Materialbahnen aus Synthesefasern und/oder Fäden weisen als solche eine hohe Festigkeit auf, aufgrund der Wirrlage im Vlies können dabei für Längs-und Querkräfte gleiche Werte oder annähernd gleiche Werte erreicht werden. Ein weiterer Vorteil ist, daß die Thermoplaste der Synthesefasern oder -fäden sich beim Extrudieren des Polyurethans auf das Vlies, mit diesem hervorragend Verbinden, da sie durch die Temperatur des Extrudates erweicht bzw. angeschmolzen werden.

Eine weitere zweckmäßige Ausgestaltung der Erfindung sieht vor, daß mindestens eine Materialbahn Glas- oder Mineralfasern enthält. Eine solche Materialbahn wird vorzugweise auf der Außenseite der Unterspannbahn eingesetzt und verleiht ihr die erforderliche Festigkeit, außerdem ist dadurch gleichzeitig ein gewisser Brandschutz gegeben.

Bevorzugt enthält mindestens eine Materialbahn eine Mischung von Synthesefasern. Die Mischung von Synthesefasern ermöglicht auf der einen Seite das feste Einbinden der Materialbahn in die Dachunterspannbahn durch Verwendung von Fasern, die sich besonders innig mit dem Polyurethan verbinden, auf der anderen Seite können gleichzeitig Fasern eingesetzt werden, die ein erhöhtes Wasserspeichervermögen aufweisen.

Die Erfindung sieht ferner vor, daß mindestens eine Materialbahn eine Mischung von Synthesefasern mit Natur- und/oder anorganischen Fasern enthält. Die Naturfasern sind dabei zweckmäßig mit Fäulnis und/oder Schimmel verhindernden Chemikalien imprägniert und dienen zur Wasserspeicherung. Die Synthesefasern haben Bindefunktion. Bei der Mischung von Synthesefasern mit anorganischen Fasern haben die Synthesefasern ebenfalls Bindefunktion, die anorganischen Fasern ergeben die Festigkeit der Unterspannbahn. Dabei weist die zur Dachinnenseite liegende Materialbahn flüssigkeitspeichernde Eigenschaften, die zur Dachaußenseite liegende Materialbahn, die festigkeitssteigernden Eigenschaften der Unterspannbahn auf.

### Beispiel 1

Ein Spunbondvlies von 40g/m², das ausschließlich Polypropylenfasern von 2,8 bis 4,2 Denier als Mischung enthält, wurde von zwei Abrollstationen einem horizontal angeordneten Walzenstuhl zugeführt. Die beiden identischen Vliesstoffbahnen umschlangen die obere bzw. untere Walze. In den gebildeten Walzenspalt wurde eine hochwasserdampfdurchlässige Polyurethanfolie eingeführt. Der Liniendruck zwischen Ober-und Unterwalze betrug 1100 Kp/m. Die Oberwalze war als gummierte Walze ausgeführt, die Unterwalze als Stahlwalze, sie wurde auf 80°C aufgeheizt. Die Polyurethanfolie besaß eine Wasserdampfdurchlässigkeit von 1100 g/m² und 24 h, ihre Dicke betrug im Mittel 35 µm.

Als Kleber waren beide Vliesbahnen mit einem punktförmig aufgebrachten reaktivierbaren PUR-Kleber ausgerüstet. Der Querschnitt der einzelnen Klebpunkte betrug 0,2 mm². Pro m waren 680 Punkte zur Bildung einer Linie auf jeder Vliesbahn angeordnet. Der Linienabstand betrug 30 mm, die Abzugsgeschwindigkeit der Bahn 30m/min. Die Verbindung zwischen den beiden Vliesbahnen war nach Abkühlung nicht lösbar, ohne die Vliesbahnen zu zerstören, auch nach einer 72-stündigen Lagerung in Wasser blieb der feste Verbund zwischen den Vliesstoffbahnen und der Polyurethanfolie erhalten. Die fertige Baufolie wies eine Reißfestigkeit von 320N/5cm und eine Wasserdampfdurchlässigkeit von 1100 g/m² 24h auf.

Das verwandte Polyurethan war ein Copolymerisat aus folgenden Bestandteilen ( alle Angaben in Gewichtsprozenten ):
PEG 41%
PTG 4%
MDI 41%
BD 9%
HD 5%
der MFI-Wert lag bei 150 g/10min ( Meßbedingungen: 190°C bei 8,7Kg Belastung ).

### Beispiel 2

Bei einem Herstellungsprozeß der sich von dem in Beispiel 1 beschriebenen dadurch unterschied, daß das Aufbringen des Klebers kurz vor dem Zusammenführen der Vliesbahnen im Walzenstuhl erfolgte, wurde als außenliegende Materialschicht ein hydrophobes Vlies, auf der Basis von Polypropylenfasern mit 3 Denier eingesetzt, das durch eine Acrylat-Dispersion gebunden war. Das Vlies wies eine Wasserdampfdurchlässigkeit von über 1800 g/m² pro 24 h auf. Das Vlies der Innenlage wurde beibehalten. Die gesamte Wasserdampfdurchlässigkeit der Baufolie betrug nach dem Verbinden 1100 g/m² pro 24 h, die Reißfestigkeit erhöhte sich auf 300 N/5cm.
Auch nach einer 72-stündigen Lagerung der Baufolie in Wasser blieb der feste Verbund zwischen den Vliesbahnen und der Polyurethanfolie erhalten.

### Beispiel 3

Bei gleichem Aufbau der Baufolie wie in Beispiel 2 wurde die innenliegende Materialbahn statt aus einem Polypropylenvlies aus einem Fadengelege von 120 g/m² aus PET-Fasern die mit einem Polyesterfaden vernäht worden waren, gebildet. Alle weiteren Parameter von Beispiel 2 wurden beibehalten. Es ergab sich eine Verbesserung des Wasseraufnahmevermögens auf 1200 g/m². Die Wasserdampfdurchlässigkeit und die Haftung der Materialbahnen an der Polyurethanfolie blieb auch nach Lagerung der Baufolie in Wasser erhalten.

### Beispiel 4

Bei gleichem Aufbau der Baufolie wie in Beispiel 1 wurde der PEG-Anteil des Copolymerisates auf 55% erhöht; der MDI-Anteil auf 31%, der BD-Anteil auf 6% und der HD-Anteil auf 4% gesenkt. Bei geringfügiger Verschlechterung der Reißfestigkeit änderte sich die Härte auf 80 Shore A und erhöhte sich die Wasserdampfdurchlässigkeit auf 1500 g/m² und 24 h.

### Beispiel 5

Eine Hauswand wurde mit zwischen Latten angeordneten Styroporplatten belegt. Über den Latten wurde, vor dem Aufbringen einer Holzbeplankung, Baufolie angeordnet die analog Beispiel 2 folgenden Aufbau aufwies:
Bei der Herstellung der Baufolie erfolgte das Aufbringen des Klebers kurz vor dem Zusammenführen der Vliesbahnen im Walzenstuhl,es wurde als außenliegende Materialschicht ein hydrophobes Vlies, auf der Basis von Polypropylenfasern mit 3 Denier eingesetzt, das durch eine Acrylat-Dispersion gebunden war. Das Vlies wies eine Wasserdampfdurchlässigkeit von über 1800 g/m² pro 24 h auf. Das Vlies der Innenlage war identisch mit dem in Beispiel 1 angegebenen. Die gesamte Wasserdampfdurchlässigkeit der Baufolie betrug nach dem Verbinden 1100 g/m² pro 24 h, die Reißfestigkeit erhöhte sich auf 300 N/5cm.
Auch nach einer 72-stündigen Lagerung der Baufolie in Wasser blieb der feste Verbund zwischen den Vliesbahnen und der Polyurethanfolie erhalten. Die mechanischen Eigenschaften der erhaltenen Baufolie ließen eine gute und schnelle Verarbeitung zu.

### Beispiel 6

Bei einem gleichen Herstellungsprozeß wie in Beispiel 1 wurde als außenliegende Materialschicht ein anorganisches Vlies, auf der Basis von Glasfasern mit 5 Denier eingesetzt, das durch eine wässrige Polyurethan-Dispersion gebunden war. Das Vlies als solches wies eine Wasserdampfdurchlässigkeit von über 3000 g/m² und 24 h auf, die gesamte Wasserdampfdurchlässigkeit der Unterspannbahn betrug nach dem Verbinden 900 g/m² und 24 h, die Reißfestigkeit erhöhte sich auf 450 N/5cm.

### Beispiel 7

Bei gleichem Aufbau der Unterspannbahn wie in Beispiel 1 wurde die innenliegende Materialbahn statt aus einem Polypropylenvlies aus einem Fadengelege von 120 g/m² aus imprägnierten Baumwollfasern die mit einem Polyesterfaden vernäht worden waren, gebildet. Alle weiteren Parameter von Beispiel 1 wurden beibehalten. Es ergab sich eine Verbesserung des Wasseraufnahmevermögens auf 1300 g/m².

### Beispiel 8

Bei gleichem Aufbau der Unterspannbahn wie in Beispiel 1 wurde der PEG-Anteil des Copolymerisates auf 55% erhöht; der MDI-Anteil auf 31%, der BD-Anteil auf 6% und der HD-Anteil auf 4% gesenkt. Bei geringfügiger Verschlechterung der Reißfestigkeit änderte sich die Härte auf 80 Shore A und erhöhte sich die Wasserdampfdurchlässigkeit auf 1500 g/m² und 24 h.

Die Erfindung wird nachstehend anhand der Zeichnungen beschrieben.

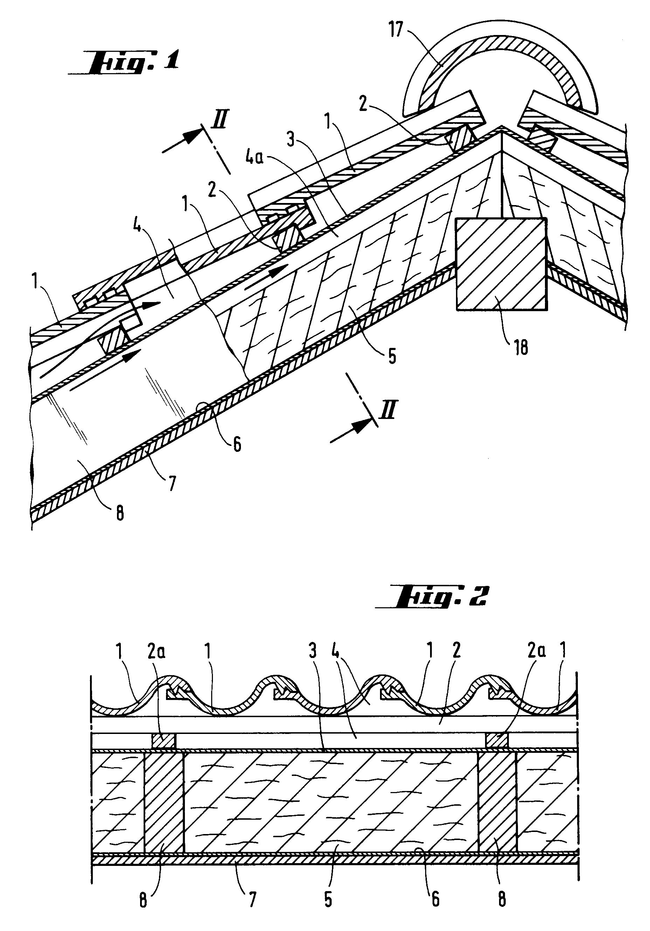

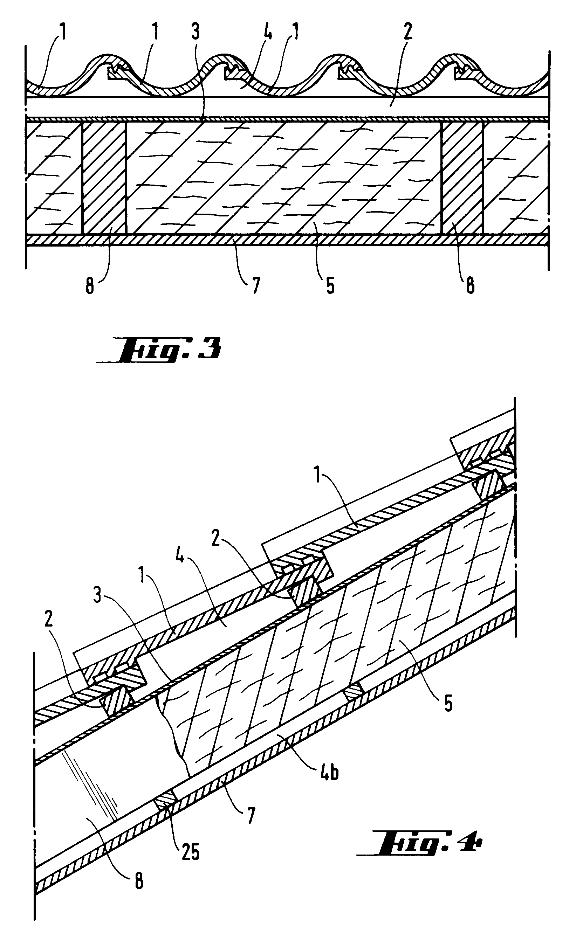

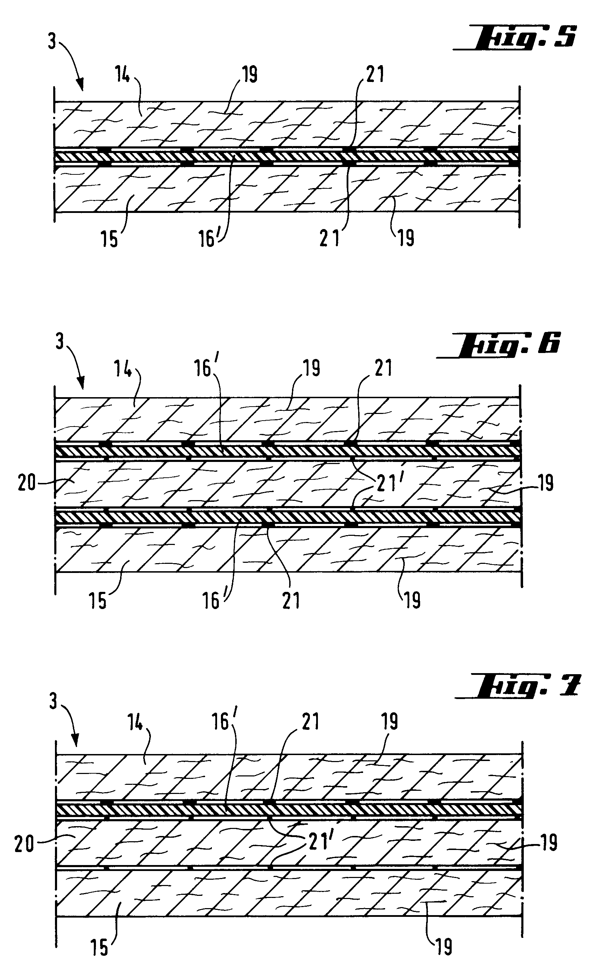

Es zeigt:
- Figur 1: einen Teilquerschnitt durch eine Dachkonstruktion
- Figur 2: einen Schnitt entlang der Linie II - II in Fig. 1
- Figur 3: einen Schnitt einer weiteren Ausführungsform gemäß Fig. 2
- Figur 4: einen Teilguerschnitt einer weiteren Ausführungsform
- Figur 5: einen Teilquerschnitt durch eine Baufolie mit zwei Vlieslagen
- Figur 6: einen Schnitt durch eine Baufolie mit drei Vlieslagen und zwei Folienlagen
- Figur 7: einen Schnitt durch eine Baufolie mit zwei innen- und einer außenliegenden Vliesbahn
- Figur 8: einen Schnitt durch eine Baufolie mit zwei Vlieslagen
- Figur 9 und 10: einen Schnitt durch eine Baufolie mit drei Vlieslagen
- Figur 11: einen Schnitt durch eine Baufolie mit zwei innen- und einer außenliegenden Vliesbahn
- Figur 12 und Figur 13: einen Teilquerschnitt durch eine Baufolie mit zwei Vlieslagen drei Vlieslagen
- Figur 14: eine REM-Aufnahme eines Synthetischen Vlieses im Schnitt
- Figur 15: eine REM-Aufnahme eines Vlieses aus Naturfasern
- Figur 16: als Prinzipsskizze die Bahnführung an einem horizontalen Walzenstuhl mit mittig angeordnetem Extruder
- Figur 17: als Prinzipsskizze die Bahnführung an einem horizontalen Walzenstuhl mit excentrisch angeordnetem Extruder
Gemäß den Figuren 1 und 2 ist auf die Sparren 8, die sich unter einem Winkel zum Firstbalken 18 erstrecken, die Unterspannbahn 3 aufgebracht, die auf dem zwischen den Sparren 8 angeordneten Wärmedämmaterial 5 direkt aufliegt und durch die Konterlattung 2a an den Sparren 8 gehalten wird ( Fig. 2 ). In Figur 1 ist eine davon gering abweichende Ausführungsform d.h., daß hier die Konterlattung 2a entfallen ist und die Unterspannbahn 3 direkt durch die Lattung 2 auf den Sparren 8 gehalten und befestigt wird. Bei Figur 1 ergibt sich dadurch ein nach außen durch die Unterspannbahn 3 abgeschlossener Luftraum 4a zwischen den einzelnen Sparren 8. Gemäß Figuren 1 und 2 erstreckt sich der Luftraum 4 von der Unterspannbahn 3 direkt bis zu den Ziegeln 1 und wird lediglich durch die Lattung 2 bzw. die Konterlattung 2a in gewisser Weise eingegrenzt.

Auf der Innenseite des Daches ist die Wärmedämmaterialschicht 5 gemäß Figur 2 mit einer Dampfsperre 6 abgedichtet, an die sich die Innenverkleidung 7, eine Gipskartonplatte, anschließt.

Abweichend davon ist in Figur 3 dargestellt, daß auf die Dampfsperre 6 verzichtet wurde und die Innenverkleidung 7 direkt auf die Sparren 8 aufgebracht ist.

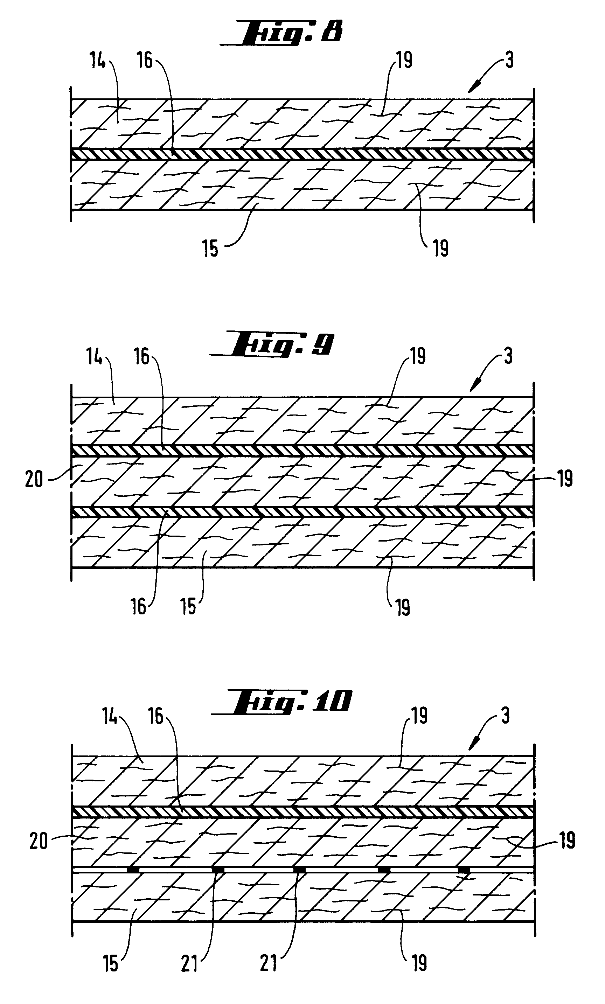

Figur 4 unterscheidet sich von Figur 3 dadurch, daß die Innenverkleidung 7 nicht direkt auf die Sparren 8 sondern auf einen Lattenrost 25 aufgebracht ist, wodurch sich auf der Innenseite zwischen dem Wärmedämmaterial 5 und der Innenverkleidung 7 ein Luftraum 4b bildet.

Die Figuren zeigen im stark vergrößerten Maßstab den Schnitt durch eine Baufolie 3 mit der äußeren Materialbahn 14, der inneren Materialbahn 15 und der beide verbindenden Polyurethanfolie 16. Beide Materialbahnen 14,15 bestehen aus Nonwoven, also aus Vlies, das durch Fasern 19 gebildet wird. Die Verbindung der Materialbahnen 14, 15 erfolgt durch in Linienform aufgebrachten Kleber 21.

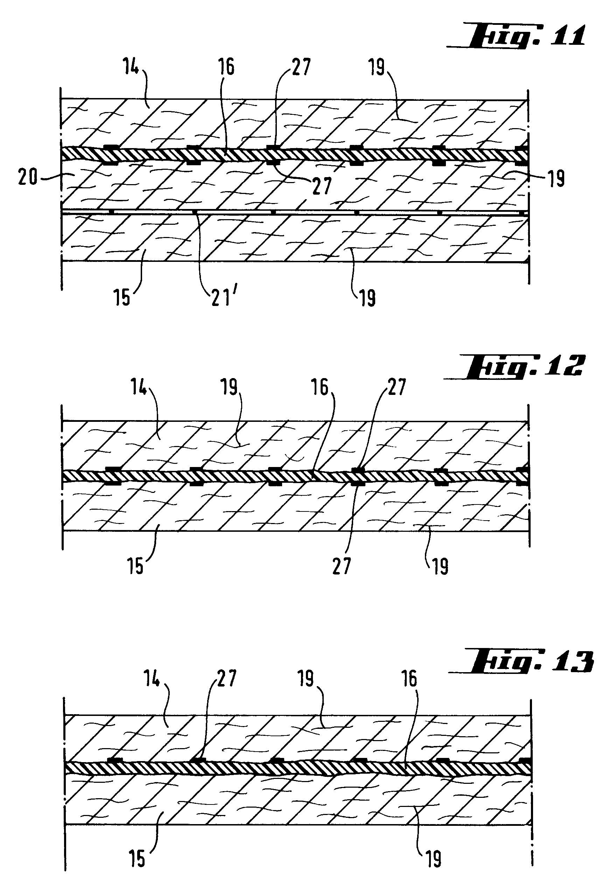

Figur 6 zeigt eine Baufolie 3 die aus drei Vliesbahnlagen aufgebaut ist. Zwischen der äußeren Materialbahn 14 und der inneren Materialbahn 15 befindet sich die mittlere Materialbahn 20, die, von zwei Polyurethanfolien 16 eingeschlossen, mit diesen durch Klebepunkte 21' verbunden ist. Die Materialbahnen 14, 15 sind durch linienförmig aufgebrachten Kleber 21 mit der Polyurethanfolie 16 verbunden.

Figur 7 Zeigt eine Baufolie 3, die ähnlich wie in Figur 6 aufgebaut ist. Die Verbindung zwischen der mittleren Materialbahn 20 und der inneren Materialbahn 15 erfolgt jedoch nicht durch das Polyurethan 16 sondern durch punktweises Verkleben mit Klebepunkten 21'. Das Volumen der inneren Materialbahn 15 wird dadurch praktisch verdoppelt d.h., daß auch die Speicherfähigkeit der inneren Materialbahn 15 vergrößert wird.

Figur 8 zeigt im stark vergrößerten Maßstab den Schnitt durch eine Baufolie 3 mit der äußeren Materialbahn 14, der inneren Materialbahn 15 und dem beide verbindenden Polyurethan 16. Beide Materialien bestehen aus Nonwoven, also aus Vlies, das durch Fasern 19 gebildet wird.

Figur 9 zeigt eine Baufolie 3, die aus drei Vliesbahnlagen aufgebaut ist. Zwischen der äußeren Materialbahn 14 und der inneren Materialbahn 15 befindet sich die mittlere Materialbahn 20. Die Materialbahnen sind durch das Polyurethan 16 miteinander verbunden .

Figur 10 weist eine Baufolie 3 auf, die ähnlich wie in Figur 6 aufgebaut ist. Die Verbindung zwischen der mittleren Materialbahn 20 und der inneren Materialbahn 15 erfolgt jedoch nicht durch das Polyurethan 16 sondern durch punktweises Verkleben mit einem Punktkleber 21. Das Volumen der inneren Materialbahn 15 wird dadurch praktisch verdoppelt d.h., daß auch die Speicherfähigkeit der inneren Materialbahn 15 vergrößert wurde.

Bei materialmäßig gleichem Aufbau unterscheiden sich die in den Figuren 11, 12 und 13 dargestellten Baufolien 3 von den Vorbeschriebenen dadurch, daß nicht eine Polyurethan-Folie 16 zwischen die Vliesbahnen 14, 15, 20 mittels Kleber 21 eingebracht ist, sondern auf eine oder mehrere der Vliesbahnen 14, 15, 20 unmittelbar vor dem Zusammenführen, also vor dem Walzenspalt, das Polyurethan als Schicht 16' aus Schmelze aufgebracht wurde. Zur besseren Verankerung der Schmelze in der bzw. den Vliesbahnen wurde hierbei vorher auf die Vliesbahnen 14, 15, oder 20, Schmelzkleber 27 aufgebracht.

Wie ersichtlich, ist die als Schmelzauftrag eingebrachte Polyurethanschicht 16' nicht so gleichmäßig in ihrer Stärke, wie die Polyurethanfolie 16 gemäß Figur 1 bis 3, da sie unterschiedlich tiewf in die Vliesbahn bzw. - bahnen eindringt.

In den Figuren 11 und 12 wurden beide Materialbahnen 14, 20 vor der Extrusionsbeschichtung mit einem Schmelzkleber 27 versehen, während gemäß Figur 6 nur eine Materialbahn 15, eine hydrophobe Bahn, mit dem Schmelzkleber 27 bedruckt wurde. Der Auftrag des Schmelzklebers 27 erfolgte mittels einer Gravurwalze in die Linien eingeätzt waren. Der Linienabstand betrug 30mm, der Abstand der einzelnen, die Linie bildenden Punkte von einander 1,5 mm.

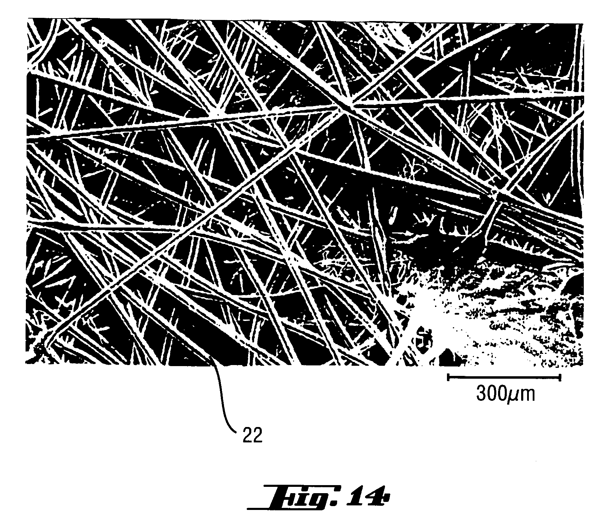

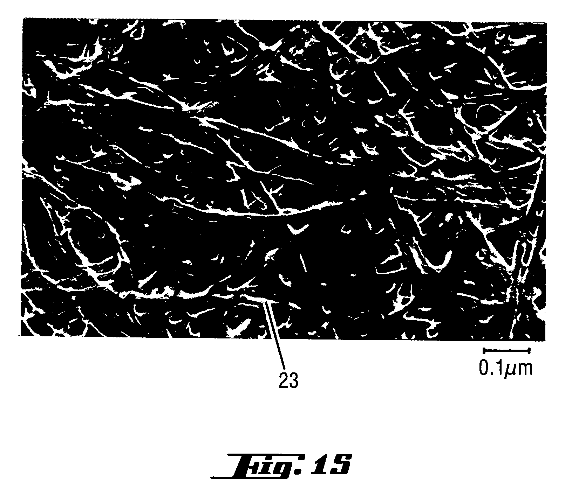

Die REM-Aufnahmen der Figuren 14 und 15 zeigen den Unterschied zwischen synthetischen Fasern 22 und Naturfasern 23. Während es bei der Verwendung von Naturfasern 23 möglich ist ohne Verbindungshilfmittel, im allgemeinen also ohne einen Kleber auf Kunstharzbasis aus zu kommen, da die Naturfasern sich aufgrund ihrer Struktur ineinander verhaken, wohingegen die Synthetikfasern und auch die anorganischen Fasern so glatt sind, daß das Vlies nur durch Bindemittel oder, im Falle von thermoplastischen Fasern, durch punktweise Erhitzung gebunden werden kann.

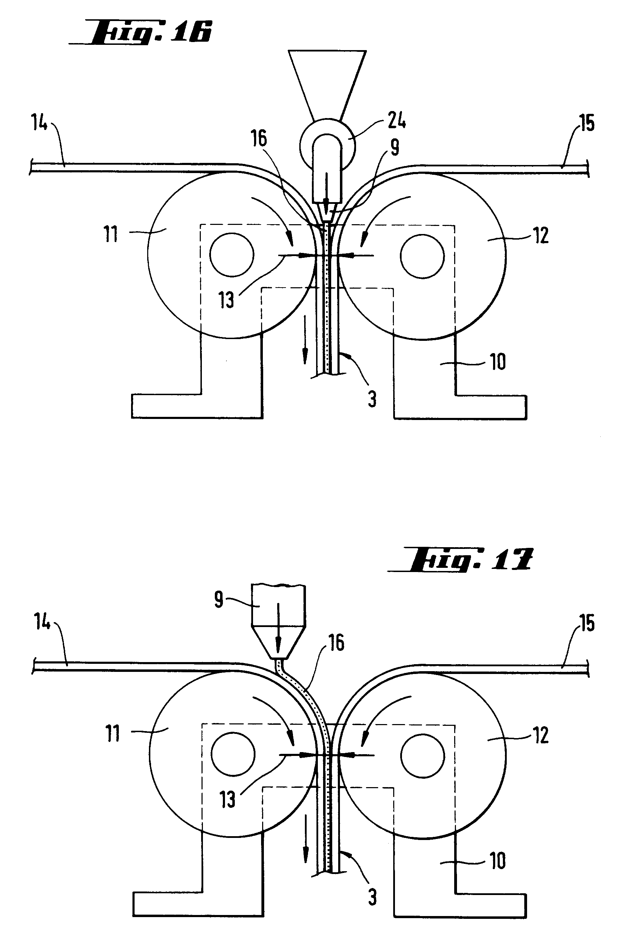

Die Figuren 16 und 17 sind Prinzipskizzen. Gemäß Figur 16 ist der Walzenstuhl 10 mit den Walzen 11 und 12 ausgerüstet. Über die Walze 11 läuft die äußere Materialbahn 14, über die Walze 12 die innere Materialbahn 15 in den Walzenspalt 13 ein. Über diesem Walzenspalt 13 befindet sich die Breitschlitzdüse 9 des Extruders 24. Er extrudiert direkt Polyurethan 16 in den Walzenspalt 13, das mittels Andruck durch die Walzen 11 und 12 die äußere Materialbahn 14 mit der inneren Materialbahn 15 verbindet.

Gemäß Figur 17 kommt den Walzen 11, 12 die selbe Funktion wie in Figur 16 zu. Der Walzenstuhl 10 ist ebenfalls horizontal angeordnet, die Extrusion des Polyurethan 16 erfolgt aber nicht in dem Walzenspalt 13, sondern aus der Breitschlitzdüse 9 direkt auf eine Materialbahn, vorzugsweise auf die äußere Materialbahn 14. Die Zusammenführung der Materialbahnen 14, 15 erfolgt im Walzenspalt 13 unter Andruck. Gegebenenfalls kann eine oder auch beide Walzen 11, 12 beheizt oder aber auch gekühlt werden.

## Patentansprüche

1. Verfahren zum Herstellen von diffusionsoffenen Baufolien für Isolierzwecke, die aus Polyurethan und Materialbahnen auf Faserbasis bestehen, insbesondere Dachunterspannbahnen zum Abdecken von Dächern mit zwischen den Sparren angeordnetem Wärmdämmaterial,
dadurch gekennzeichnet,
daß zumindest zwei Materialbahnen mit einer wasserdampfdurchlässigen Polyurethanschicht verbunden werden.

2. Verfahren nach Anspruch 1
dadurch gekennzeichnet,
daß die Materialbahnen mit der wasserdampfdurchlässigen Polyurethanschicht verklebt werden.

3. Verfahren nach Anspruch 1 oder 2
dadurch gekennzeichnet,
daß als wasserdampfdurchlässige Polyurethanschicht eine Polyurethanfolie mit einer Dicke von 8µm bis 50µm eingesetzt wird.

4. Verfahren nach einem der Ansprüche 1 bis 3
dadurch gekennzeichnet,
daß die Verklebung punktförmig erfolgt.

5. Verfahren nach einem der Ansprüche 1 bis 3
dadurch gekennzeichnet,
daß die Verklebung linienförmig erfolgt.

6. Verfahren nach einem der Ansprüche 1 bis 5
dadurch gekennzeichnet,
daß der Kleber 3 bis 20 % der zu verklebenden Fläche abdeckt.

7. Verfahren nach einem der Ansprüche 1 bis 6
dadurch gekennzeichnet,
daß als Kleber ein Ein- oder Zweikomponeten Kleber auf Polyurethan Basis aufgebracht wird.

8. Verfahren nach einem der Ansprüche 1 bis 6
dadurch gekennzeichnet,
daß ein reaktivierbarer Kleber aufgebracht wird.

9. Verfahren nach einem der Ansprüche 1 bis 8
dadurch gekennzeichnet,
daß als Materialbahnen Vliesstoffbahnen eingesetzt werden.

10. Verfahren nach einen der Ansprüche 1 - 9
dadurch gekennzeichnet,
daß Materialbahnen unterschiedlichen Aufbaus und oder unterschiedlicher Faserzusammensetzung verwandt werden.

11. Verfahren nach einem der Ansprüche 1 bis 10
dadurch gekennzeichnet,
daß der Kleber auf die Materialbahnen aufgebracht wird.

12. Verfahren nach einem der Ansprüche 1 bis 11
dadurch gekennzeichnet,
daß die zur Dachinnenseite angeordnete Materialbahn hydrophil, die zur Dachaußenseite angeordnete hydrophob ausgeführt ist.

13. Verfahren nach einem der Ansprüche 1 bis 12
dadurch gekennzeichnet,
daß die Materialbahnen aus Synthesefasern und/oder - fäden bestehen und eine Dicke von 80µm bis 500µm aufweisen.

14. Verfahren nach einem der Ansprüche 1 bis 13
dadurch gekennzeichnet,
daß der auf die Materialbahnen aufgebrachte Kleber beim Zusammenführen und Verpressen der Materialbahnen mit der Polyurethanfolie aktiviert wird.

15. Verfahren nach einem der Ansprüche 1 bis 14
dadurch gekennzeichnet,
daß als Polyurethanfolie eine hoch wasserdampfdurchlässige Folie eingesetzt wird.

16. Verfahren nach einem der Ansprüche 1 bis 15
dadurch gekennzeichnet,
daß die Wasserdampfdurchlässigkeit der Polyurethanfolie mehr als 500 g/m² und 24 h beträgt.

17. Verfahren nach einem der Ansprüche 1 bis 16
dadurch gekennzeichnet,
daß der Liniendruck zwischen den Walzen, die die Materialbahnen mit der Polyurethanfolie zusammenführen und zur Verbindung zusammenpressen, zwischen 700 und 1400 Kp/m liegt.

18. Verfahren nach einem der Ansprüche 1 bis 17
dadurch gekennzeichnet,
daß das Polyurethan für die Herstellung der Polyurethanfolie, die als Zwischenschicht zwischen den Materialbahnen liegt, aus drei Komponenten polymerisiert wird;
wobei die erste Komponente aus einem Polyolgemisch besteht, das Polyäthylenglycol ( PEG ) oder ein PEG-Copolymer sowie Polypropylenglycol ( PPG ) und/oder Polytetramethylenglycol ( PTG ) und/oder Polycaprolactan (PCL) und/oder Polycarbonat (PC) und/oder Polyadipate enthält;
die zweite Komponente aus
Methylendiphenyldiisocyanat (MDI) besteht;
und die dritte Komponente mindestens einen Kettenverlängerer und oder Gemische von mehreren enthält.

19. Verfahren nach einem der Ansprüche 1 bis 18
dadurch gekennzeichnet,
daß die Komponenten in folgendem Gewichtsverhältnis in der Copolymerisatzusammensetzung vorhanden sind: Polyolgemisch ( Komponente 1 ): 30 bis 60 Gewichtsprozent;
MDI ( Komponente 2 ): 30 bis 50 Gewichtsprozent; Diolgemisch ( Komponente 3 ): 10 bis 20 Gewichtsprozent;
und sich auf 100 Gewichtsprozent ergänzen.

20. Verfahren nach einem der Ansprüche 1 bis 19
dadurch gekennzeichnet,
daß Kurzkettenglykole und/oder deren Gemische verwandt werden.

21. Verfahren nach einem der Ansprüche 1 bis 20
dadurch gekennzeichnet,
daß Kurzkettenglykole und/oder deren Gemische verwandt werden, die aus der Reihe BD, HD, EG, DEG oder NPG ausgewählt sind.

22. Verfahren nach Anspruch 1
dadurch gekennzeichnet,
daß zumindest auf eine Materialbahn Polyurethan extrudiert und diese mit einer weiteren Materialbahn zusammengeführt, verpreßt und abgekühlt wird.

23. Verfahren nach einen der Ansprüche 1 und 22
dadurch gekennzeichnet,
daß die Fasern zumindest einer der Materialbahnen durch das Polyurethan angeschmolzen werden.

24. Verfahren nach einen der Ansprüche 1, 22 oder 23
dadurch gekennzeichnet,
daß die Eindringtiefe des Polyurethan 5% bis 50% einer Materialbahndicke beträgt.

25. Verfahren nach einem der Ansprüche 1, 22 - 24
dadurch gekennzeichnet,
daß zumindest auf eine der Materialbahnen vor der Extrusionsbeschichtung ein Kleber aufgebracht wird.

26. Verfahren nach einem der Ansprüche 1, 22 - 25
dadurch gekennzeichnet,
daß ein reaktivierbarer Kleber auf Polyurethanbasis aufgebracht wird.

27. Verfahren nach einem der Ansprüche 1, 22 bis 26
dadurch gekennzeichnet,
daß der Kleber auf die hydrophile Materialbahn aufgebracht wird.

28. Verfahren nach einem der Ansprüche 1, 22 - 27
dadurch gekennzeichnet,
daß durch zwei Materialbahnen ein Walzenspalt gebildet und in diesen Polyurethan extrudiert, mit den Materialbahnen verpreßt und abgekühlt wird.

29. Verfahren nach einem der Ansprüche 1, 22 bis 28
dadurch gekennzeichnet,
daß ein Polyurethan mit einer Wasserdampfdurchlässigkeit von mindestens 500 g/m² 24h und einer Härte von 80 bis 95 Shore A verwandt wird, das ein flaches Schmelztemperaturprofil besitzt.

30. Verfahren nach einem der Ansprüche 1, 22 bis 29
dadurch gekennzeichnet,
daß ein Polyurethan mit einem Schmelzindex zwischen 10g/10min bei 160°C und 5g/10min bei 200°C verwandt wird.

31. Verfahren nach einem der Ansprüche 1, 22 bis 30
dadurch gekennzeichnet,
daß der Liniendruck zwischen den Anpreßwalzen zwischen 70 Kp/m und 1400 Kp/m liegt.

32. Diffusionsoffene Baufolie die aus Polyurethan und Materialbahnen auf Faserbasis besteht und insbesondere zum Abdecken von Dächern, zwischen deren Sparren Wärmedämmaterial angeordnet ist, verwandt wird,
dadurch gekennzeichnet,
daß das Polyurethan, das als Zwischenschicht zwischen den Materialbahnen liegt, ein Copolymerisat aus drei Komponenten ist;
wobei die erste Komponente aus einem Polyolgemisch besteht, das Polyäthylenglycol ( PEG ) oder ein PEG-Copolymer sowie Polypropylenglycol ( PPG ) und/oder Polytetramethylenglycol ( PTG ) und/oder Polycaprolacton (PCL) und/oder Polycarbonat (PC) und/oder Polyadipate enthält;
die zweite Komponente Methylendiphenyldiisocyanat (MDI) ist;
und die dritte Komponente mindestens einen Kettenverlängerer und/oder Gemische von mehreren enthält.

33. Baufolie nach Anspruch 32
dadurch gekennzeichnet,
daß die Komponenten in folgendem Gewichtsverhältnis in der Copolymerisatzusammensetzung vorhanden sind: Polyolgemisch ( Komponente 1 ): 30 bis 60 Gewichtsprozent;
MDI ( Komponente 2 ): 30 bis 50 Gewichtsprozent; Diolgemisch ( Komponente 3 ): 10 bis 20 Gewichtsprozent;
und sich auf 100 Gewichtsprozent ergänzen.

34. Baufolie nach Anspruch 32 oder 33
dadurch gekennzeichnet,
daß die erste Komponente aus einem Polyolgemisch besteht, das 16 bis 100 Gewichtsprozent Polyäthylenglycol ( PEG ) und/oder PEG-Copolymer sowie, ergänzend auf 100 Gewichtsprozent, Polypropylenglycol ( PPG ) und/oder Polytetramethylenglycol ( PTG ) und/oder Polycaprolacton (PCL) und/oder Polycarbonat (PC) und/oder Polyadipate enthält.

35. Baufolie nach einem der Ansprüche 32 bis 34
dadurch gekennzeichnet,
daß die dritte Komponente als Kettenverlängerer ein oder mehrere Kurzkettenglykole oder Gemische davon enthält.

36. Baufolie nach einem der Ansprüche 32 bis 35
dadurch gekennzeichnet,
daß als Kettenverlängerer ein oder mehrere Kurzkettenglykole aus der Reihe
Butandiol ( BD ), Hexandiol ( HD ), Äthylenglycol ( EG ), Diäthylenglycol ( DEG ), Neopentylglycol ( NPG ), einzeln oder als Gemisch zugesetzt sind.

37. Baufolie nach einem der Ansprüche 32 bis 36,
dadurch gekennzeichnet,
daß mindestens eine Materialbahn ein Fadengelege ist.

38. Baufolie nach einem der Ansprüche 32 bis 36,
dadurch gekennzeichnet,
daß mindestens eine der Materialbahnen ein Vlies ist.

39. Baufolie nach einem der Ansprüche 32 bis 38,
dadurch gekennzeichnet,
daß die Materialbahnen aus Synthesefasern und/oder -fäden bestehen.

40. Baufolie nach einem der Ansprüche 32 bis 39,
dadurch gekennzeichnet,
daß mindestens eine Materialbahn Glas- oder Mineralfasern enthält.

41. Baufolie nach einem der Ansprüche 32 bis 40,
dadurch gekennzeichnet,
daß mindestens eine Materialbahn eine Mischung von Synthesefasern enthält.

42. Baufolie nach einem der Ansprüche 32 bis 41,
dadurch gekennzeichnet,
daß mindestens eine Materialbahn eine Mischung von Synthesefasern mit Natur- und/oder anorganischen Fasern enthält.

43. Baufolie nach einem der Ansprüche 32 bis 42,
dadurch gekennzeichnet,
daß die zur Dachinnnenseite liegende Materialbahn flüssigkeitsspeichernde Eigenschaften aufweist.

44. Baufolie nach einem der Ansprüche 32 bis 43,
dadurch gekennzeichnet,
daß die zur Dachaußenseite liegende Materialbahn im wesentlichen die Festigkeit der Baufolie ergibt.
